# EUROPEAN PATENT SPECIFICATION

(11) **EP 1 527 687 B1**
(45) Date of publication and mention of the grant of the patent: **14.05.2014**
(21) Application number: 04447243.9
(22) Date of filing: 03.11.2004
(51) Int. Cl.: A21B 3/15

(54) **Porous plastic baking pan**
Backform aus poroesem Plastik
Moule de cuisson en plastique poreux

(30) Priority: 03.11.2003 EP 03447270
(43) Date of publication of application: 04.05.2005
(73) Proprietor: Clean Baking Products, 2070 Zwijndrecht (BE)
(72) Inventor: Hiel, Clem, 2070 Zwijndrecht (BE)
(74) Representative: Caers, Raphael Frans Ivo

(56) References cited:
- EP-A- 0 846 419
- US-A- 4 168 334
- US-A- 5 124 519

## Description

The present invention relates to a baking pan made of a plastic material as described in the preamble of the first claim. A baking pan made of ceramic material is for instance known from US 4,168,334.

The use of plastic baking in the baking of bread, sponge-cake or other pastry, is well known in the art. These baking pans having widely varying sizes and shapes.

For example, from EP-A-846.419 a one piece baking tin with an homogeneous composition and construction for use in conventional ovens is known which is made of a plastic material having a heat deflection temperature above a critical minimum value, examples are polyetherimide, polyaryletherketone, and polyetherlether ketone. Although it is alleged that greasing of the baking pan is not necessary when charging the pan with dough to be baked, experience indicate that the baking results from these pans are still unsatisfactory, in particular the baking times are too long and the dough is sticks to the walls of the baking pan.

In US-A-4772653 it is explained that interpolymers of unsaturated dicarboxylic acid with a polyarylate, a polycarbonate, a polyarylether resin or polyetherimide are suitable materials for the fabrication of microwave oven cookware. The reason is that these materials are readily thermoformable and possess a dimensional stability withstanding moderate temperature environments such as those prevailing in microwave ovens. US 5,124,519 discloses open ended baking trays fabricated of a composite material, having a 3-layer structure. In each of the two alternatives disclosed, the high porosity fibrous layer forms one of the outer layers sandwiching an intermediate layer having a lower porosity. The baking result of such baking pan may further be improved.

There is thus a need for a baking pan which, in particular in conventional ovens, shows an improved baking result.

The present invention therefore addresses the problem of providing a baking pan with which an improved baking of dough in conventional ovens may be achieved.

This is achieved according to the present invention with the technical features of the characterising part of the first claim.

The baking pan of the present invention comprises a bottom connected to at least one side wall, the bottom and side wall enclosing an open top central baking space for receiving dough to be baked. The baking pan or tin of this invention is made of a porous plastic material, whereby the plastic material comprises on the side facing the central baking space and the side pointing away from the central baking space, a skin-like layer forming a kind of outer and inner skin. The outer and inner skin sandwich between them an intermediate porous layer, the intermediate porous layer being characterised in that it is having a higher porosity, and thus a lower density, as compared to the inner and outer skin. Similarly the walls of the baking pan will have a varying density, with the density variation always occurring in such a way that the inner and outer surfaces of the pan have the highest density and the core, which is the section between the inner and outer skin, having the lowest density. The inventor has surprisingly found that the use of a baking pan made of a porous material provides an improved baking result. In particular, the inventor has found that not only the time needed to bake a selected amount of dough decreases, but also observed a better release of the product from the pan and a more even and pleasing finished cook surface. In particular the crust of the baked dough has been found to show a nice crusty brown colour.

Although plastic materials are generally Known as poor heat conductors, the inventor believes that porous plastic materials provide a more uniform distribution of the heat within the material of the baking pan as compared to the conventional plastic materials. As a consequence, improved heat transport from the baking tin to the dough can be achieved, resulting in an improved baking process. The improved heat transport to the dough results therein that the need to grease the baking tin before charging it with dough, in view of facilitating the release of the baked product, can be dispensed with. The inventor has found that even if no greasing is applied, the risk to sticking of remainders of the baked product to the walls of the pan, may be reduced to a minimum regardless of the nature of the dough.

To achieve optimum baking results, it is preferred to use a plastic material having a porosity of at least 10 vol. %, preferably at least 15 vol. %, more preferably at least 20 vol. %. The porosity has been measured with the technique of mercury porosimetry, which is a technique well known to the person skilled in the art. The use of a porous material allows pans to be made with less plastic material and thereby decrease the weight of the baking pan.

An optimum aesthetic baking result is achieved if the wall of the plastic pan has a differential density from skin to core.

The mean diameter of the pores of the intermediate core layer will usually between 0.0001 and 0.05 mm, preferably between 0.0005 and 0.05 mm, more preferably between 0.005 and 0.05 mm.

The outer and inner skin of the plastic material will usually have a thickness which is substantially smaller than the thickness of the intermediate layer sandwiched between them. In general, the thickness of the inner and outer layer will be less than about 0.5 mm, preferably less than 0.25 mm, more preferably less than 0.05 mm. The thickness of the intermediate layer on the other hand will usually be at least 0.5 mm, preferably at least 1 mm, and smaller than 5 mm, preferably less than 2.5 mm.

The nature of the plastic material used is not critical to the invention. The person skilled in the art will be able without undue experimentation, to find the optimum plastic material depending on the intended application. The plastic baking tin of the present invention has namely been found to be suitable not only for use with conventional ovens, but also for use with further types of ovens such as microwave ovens, and other types of radiation such as radio frequency and laser irradiation.

Suitable materials for making the baking tin of this invention include syndiotacticpolystyrene (SPS), polyethylene, COC's (cyclic olefin copolymers), polypropylene in particular syndiotactic polypropylene, ABS, SAN (styrene-acrylonitrile), polycarbonate, polyamide, polyphenyleneoxide, and PET with an IV which is preferably > 0.65, more preferably IV > 0.75, most preferably IV > 0.85).

It is however also possible to use a fibre reinforced plastic material. Suitable fibrous reinforcing materials include natural fibres for such as for example mineral fibres for example glass fibres, or fibres of synthetic materials for example polyester, polypropylene, polyethylene, polyamide, or mixtures of two or more of these fibres. However, when necessary the person skilled in the art will be capable of selecting among the fibrous reinforcing materials known to him, the most suitable material taking into account the envisaged application.

When producing the baking pan of the present invention, the person skilled in the art has a wide variety of techniques available to him.

A first possible technique includes conventional injection moulding, according to which the plastic material containing a foaming agent is mixed with the molten plastic using an extruder with an endless screw. The plastic material is shaped by injecting an amount of it into a mould cavity, in which the plastic material is allowed to foam. The skins of the material which form against the surface of the mould will have a high density, with a decreasing density as you move from skin to core. The density variation will be dependent on the amount of foaming agent added to the plastic. Another possible technique includes the so-called MuCell Molding technique disclosed in EP-A-1264672. This is a suitable technique for producing a porous plastic material having an outer and inner skin of higher density, sandwiching between them a core of a lower density than the skin. With the MuCell Molding technique, the plastic material to be shaped is fed to an endless screw where it is molten and where a gas in the supercritical state is injected into the polymer melt in such a way that a fine distribution of the gas in the plastic material is achieved. As the molten plastic material containing the supercritical gas is injected into a heated mould, pressure drops. Following this pressure drop nucleation sites are formed in the molten plastic. As the mould is further filled, the gas dissolved in the plastic material expands, thus creating the cellular system within the plastic material, forming a low density material. Under these conditions an extremely large number of cells is formed even before cell growth occurs. After having been injected, diffusion of the supercritical gas through the plastic material takes place, in such a way that the pores or cells grow at the same time and virtually the same rate. The result is a material having a large number of evenly distributed, uniformly sized microscopic cells. After the plastic material has been shaped, the mould is cooled down and the cellular system is locked into the matrix.

The baking pan of this invention is an article that can have a variety of shapes and sizes and is not limited by geometrical constraints as long as it serves the primary function of containing dough during the cooking or baking process. Shapes of baking pans that are typically seen will be flat structures for cooking items like pizza; or flat structures with a small raised surface (lip) at the edge as might be found on a cookie sheet; or a flat surface with four attached walls as is common in a bread pan.

## Claims

1. A one-piece baking pan made of a plastic material, the baking pan comprising a bottom connected to at least one side wall, the bottom and side wall enclosing an open top central baking space for receiving dough to be baked, the baking pan being made of a porous plastic material whereby the plastic material comprises an inner skin at the side of the side and bottom walls facing the central baking space, and an outer skin at the side of the side wall pointing away from the central baking space, the inner skin and outer skin sandwiching between them an intermediate porous layer, **characterised in that** the intermediate porous layer has a higher porosity than the inner and outer skin.

2. A one-piece baking pan as claimed in claim 1 **characterised in that** the plastic material has a differential density from skin to core.

3. A one-piece baking pan as claimed in any one of claims 1-2, **characterised in that** the plastic material has a porosity of at least 10 vol. %, preferably at least 15 vol. %, more preferably at least 20 vol. %.

4. A one-piece baking pan as claimed in any one of claims 1-3, **characterised in that** the pores of the intermediate layer have a mean pore diameter of between 0.0001 and 0.05 mm, preferably between 0.0005 and 0.05 mm, more preferably between 0.005 and 0.05 mm.

5. A one-piece baking pan as claimed in any one of claims 1-4, **characterised in that** the inner and outer layer have a thickness which is less than about 0.5 mm, preferably less than 0.25 mm, more preferably less than 0.05 mm.

6. A one-piece baking pan as claimed in any one of claims 1-5, **characterised in that** the intermediate layer has a thickness which is at least 0.5 mm, preferably at least 1 mm and less than 5 mm, preferably less than 2.5 mm.

7. A one-piece baking pan as claimed in any one of claims 1-6, **characterised in that** as a plastic material use is made of a material selected from the group consisting of syndiotactic polystyrene (SPS), polyethylene, COC's (cyclic olefin copolymers), polypropylene, in particular syndiotactic polypropylene, ABS, SAN (styrene-acrylonitrile), polycarbonate, polyamide, poly(phenylene oxide), and PET.

8. A one-piece baking pan as claimed in any one of claim 1-7, **characterised in that** as a plastic material use is made of a fibrous reinforced plastic material.

9. A one-piece baking pan as claimed in claim 8, **characterised in that** the fibrous reinforced plastic material uses a fibrous
reinforcing material which is selected from the group consisting of natural fibres such as for example mineral fibres, for example glass fibres, or fibres of synthetic materials, for example polyester, polypropylene, polyethylene polyamide, or mixtures of two or more of these.

## Patentansprüche

1. Einstückige Backform, die aus einem Kunststoffmaterial hergestellt ist, wobei die Backform einen Boden umfasst, der mit mindestens einer Seitenwand verbunden ist, wobei der Boden und die Seitenwand einen offenen oberen mittleren Backraum zum Aufnehmen von zu backendem Teig umschließen, wobei die Backform aus einem porösem Kunststoffmaterial hergestellt ist, wobei das Kunststoffmaterial eine Innenhaut an der Seite der Seiten- und Bodenwände, die dem mittleren Backraum zugewandt sind, und eine Außenhaut an der Seite der Seitenwand, die von dem mittleren Backraum hinwegzeigt, umfasst, wobei die Innenhaut und die Außenhaut zwischen ihnen eine poröse Zwischenschicht umgeben, **dadurch gekennzeichnet, dass** die poröse Zwischenschicht eine höhere Porosität aufweist als die Innen- und Außenhaut.

2. Einstückige Backform nach Anspruch 1, **dadurch gekennzeichnet, dass** das Kunststoffmaterial eine unterschiedliche Dichte von der Haut zum Kern aufweist.

3. Einstückige Backform nach einem der Ansprüche 1 - 2, **dadurch gekennzeichnet, dass** das Kunststoffmaterial eine Porosität von mindestens 10 Vol.-%, bevorzugt mindestens 15 Vol.-%, noch bevorzugter mindestens 20 Vol.-% aufweist.

4. Einstückige Backform nach einem der Ansprüche 1 - 3, **dadurch gekennzeichnet, dass** die Poren der Zwischenschicht einen mittleren Porendurchmesser zwischen 0,0001 und 0,05 mm, bevorzugt zwischen 0,0005 und 0,05 mm, noch bevorzugt zwischen 0,005 und 0,05 mm aufweisen.

5. Einstückige Backform nach einem der Ansprüche 1 - 4, **dadurch gekennzeichnet, dass** die Innen- und Außenschichten eine Dicke aufweisen, die weniger als etwa 0,5 mm, bevorzugt weniger als 0,25 mm, noch bevorzugter weniger als 0,05 mm beträgt.

6. Einstückige Backform nach einem der Ansprüche 1 - 5, **dadurch gekennzeichnet, dass** die Zwischenschicht eine Dicke aufweist, die mindestens 0,5 mm, bevorzugt mindestens 1 mm und weniger als 5 mm, bevorzugt weniger als 2,5 mm beträgt.

7. Einstückige Backform nach einem der Ansprüche 1 - 6, **dadurch gekennzeichnet, dass** als Kunststoffmaterial Gebrauch gemacht wird von einem Material ausgewählt aus der Gruppe bestehend aus syndiotaktischem Polystyrol (SPS), Polyethylen, COC (cyclischen Olefincopolymeren), Polypropylen, insbesondere syndiotaktischem Polyproplylen, ABS, SAN (Styrol-Acrylnitril), Polycarbonat, Polyamid, Poly(phenylenoxid) und PET.

8. Einstückige Backform nach einem der Ansprüche 1 - 7, **dadurch gekennzeichnet, dass** als Kunststoffmaterial Gebrauch gemacht wird von einem faserigen verstärkten Kunststoffmaterial.

9. Einstückige Backform nach Anspruch 8, **dadurch gekennzeichnet, dass** bei dem faserigen, verstärkten Kunststoffmaterial Gebrauch gemacht wird von einem faserigen verstärkenden Material, das aus der Gruppe ausgewählt ist bestehend aus Naturfasern, wie beispielsweise Mineralfasern, beispielsweise Glasfasern, oder Fasern aus synthetischen Materialien, beispielsweise Polyester, Polypropylen, Polyethylen, Polyamid oder Mischungen von zwei oder mehreren derselben.

## Revendications

1. Moule de cuisson d'un seul tenant réalisé dans une matière plastique, le moule de cuisson comprenant un fond relié à au moins une paroi latérale, le fond et la paroi latérale enfermant un espace de cuisson central ouvert sur le dessus destiné à recevoir de la pâte à cuire, le moule de cuisson étant réalisé dans une matière plastique poreuse, la matière plastique comprenant une peau intérieure sur le côté des parois latérale et de fond faisant face à l'espace de cuisson central et une peau extérieure sur le côté de la paroi latérale orienté dans le sens opposé à l'espace de cuisson central, la peau intérieure et la peau extérieure prenant en sandwich entre elles une couche intermédiaire poreuse, **caractérisé en ce que** la couche intermédiaire poreuse a une porosité plus élevée que les peaux intérieure et extérieure.

2. Moule de cuisson d'un seul tenant tel que revendiqué dans la revendication 1, **caractérisé en ce que** la matière plastique a une densité différentielle de la peau au coeur.

3. Moule de cuisson d'un seul tenant tel que revendiqué dans l'une quelconque des revendications 1 - 2, **caractérisé en ce que** la matière plastique a une porosité d'au moins 10 % en volume, de préférence d'au moins 15 % en volume, mieux encore d'au moins 20 % en volume.

4. Moule de cuisson d'un seul tenant tel que revendiqué dans l'une quelconque des revendications 1 - 3, **caractérisé en ce que** les pores de la couche intermédiaire ont un diamètre moyen de pore compris entre 0,0001 et 0,05 mm, de préférence entre 0,0005 et 0,05 mm, mieux encore entre 0,005 et 0,05 mm.

5. Moule de cuisson d'un seul tenant tel que revendiqué dans l'une quelconque des revendications 1 - 4, **caractérisé en ce que** les couches intérieure et extérieure ont une épaisseur qui est inférieure à environ 0,5 mm, de préférence inférieure à 0,25 mm, mieux encore inférieure à 0,05 mm.

6. Moule de cuisson d'un seul tenant tel que revendiqué dans l'une quelconque des revendications 1 - 5, **caractérisé en ce que** la couche intermédiaire a une épaisseur qui est d'au moins 0,5 mm, de préférence d'au moins 1 mm et de moins de 5 mm, de préférence de moins de 2,5 mm.

7. Moule de cuisson d'un seul tenant tel que revendiqué dans l'une quelconque des revendications 1 - 6, **caractérisé en ce qu'**il est fait usage comme matière plastique d'une matière sélectionnée dans le groupe consistant en polystyrène syndiotactique (SPS), polyéthylène, COC (copolymère d'oléfine cyclique), polypropylène, en particulier polypropylène syndiotactique, ABS, SAN (styrène-acrylonitrile), polycarbonate, polyamide, oxyde de polyphénylène et PET.

8. Moule de cuisson d'un seul tenant tel que revendiqué dans l'une quelconque des revendications 1 - 7, **caractérisé en ce qu'**il est fait usage comme matière plastique d'une matière plastique renforcée par des fibres.

9. Moule de cuisson d'un seul tenant tel que revendiqué dans la revendication 8, **caractérisé en ce que** la matière plastique renforcée par des fibres utilise une matière de renforcement fibreuse qui est sélectionnée dans le groupe consistant en fibres naturelles comme, par exemple, des fibres minérales, par exemple des fibres de verres, ou des fibres de matières synthétiques, par exemple polyester, polypropylène, polyéthylène, polyamide ou des mélanges de deux ou de plus de deux de ceux-ci.
